# EUROPÄISCHE PATENTSCHRIFT

(11) **EP 1 682 389 B1**
(45) Veröffentlichungstag und Bekanntmachung des Hinweises auf die Patenterteilung: **30.05.2012**
(21) Anmeldenummer: 04786735.3
(22) Anmeldetag: 10.09.2004
(51) Int. Cl.: B60S 1/04

(54) **SCHEIBENWISCHVORRICHTUNG, INSBESONDERE FÜR EIN KRAFTFAHRZEUG**
WINDOW WIPING DEVICE, ESPECIALLY FOR A MOTOR VEHICLE
DISPOSITIF ESSUIE-GLACE, NOTAMMENT POUR UN VEHICULE AUTOMOBILE

(30) Priorität: 07.11.2003 DE 10352468
(43) Veröffentlichungstag der Anmeldung: 26.07.2006
(73) Patentinhaber: ROBERT BOSCH GMBH, 70442 Stuttgart (DE)
(72) Erfinder: BENNER, Andreas, 76534 Baden-Baden (DE)
(86) Internationale Anmeldenummer: PCT/DE2004/002013
(87) Internationale Veröffentlichungsnummer: WO 2005/044647

(56) Entgegenhaltungen:
- EP-A- 0 806 329
- EP-A- 1 074 442
- EP-A- 1 475 285
- GB-A- 2 375 158

## Beschreibung

### Stand der Technik

Die Erfindung betrifft eine Scheibenwischvorrichtung, insbesondere für ein Kraftfahrzeug nach Gattung des unabhängigen Anspruchs,

Es sindlschon zahlreiche Scheibenwischvorrichtungen, beispielsweise aus der DE 196 18 873 bekannt, die eine Wischerwelle mit einem Einstich aufweisen, die in einem Wischerlage als Aufnahmemittel gelagert ist. Die Wischerwelle weist hierbei ein freies Ende auf, dass aus dem Aufnahmemittel herausragt. Zur axialen Arretierung der Wischerwelle ist hierbei ein Arretierungselement vorgesehen, welches als C-förmiger Ring ausgebildet ist, der koaxial auf der Wischerwelle angeordnet ist und sich in axialer Richtung unter einem Winkel auf das Aufnahmemittel zu verjüngt oder erweitert. Wirkt eine Kraft auf das freie Ende der Wischerwelle, so wird der C-förmige Ring aufgebogen wodurch die Wischerwelle zurückweichen kann und in Richtung des Aufnahmemittels geschoben wird. Auf diese Weise kann sich das freie Ende der Wischerwelle, an dem der Wischerarm befestigt ist, beim Aufprall eines Fußgängers auf die Wischerarme oder die Wischerwellen, in Richtung des Karosserie des Kraftfahrzeugs bewegen, wodurch die Verletzungsgefahr für den Fußgänger reduziert wird.

Eine derartige Lösung ist jedoch relativ aufwendig, kostenintensiv und darüber hinaus in der Fertigung des Arretierungselements problematisch.

Aus der EP-A-1475285, die Stand der Technik im Hinblick auf Artikel 54 Absatz 3 EPÜ darstellt, ist eine Scheibenwischvorrichtung bekannt, die eine Wischerwelle mit einem Einstich aufweist, wobei ein Aufnahmemittel zur Aufnahme der Wischerwelle derart vorgesehen ist, dass die Wischerwelle mit einem freien Ende aus dem Aufnahmemittel herausragt. Ein ringförmiges Arretierungselement, das entlang seines Umfangs eine Unterbrechung aufweist, ist zur axialen Arretierung der Wischerwelle im Aufnahmemittel vorgesehen und im Einstich angeordnet. Das Arretierungselement ist im Querschnitt von rechteckiger Struktur, und der Einstich weist in axialer Richtung der Wischerwelle eine Schräge auf, an der das Arretierungselement bei Einwirkung einer vorbestimmten, axialen Kraft auf der Wischerwelle entlangzugleiten vermag.

Aus der DE 198 51 881 C2 ist bekannt, in einer Wischerwelle einen im Querschnitt V-förmigen Einstich vorzusehen, in dem ein C-förmiger Ring mit einem im wesentlichen kreisförmigen Querschnitt zur Arretierung der Wischerwelle eingesetzt ist.

Problematisch ist hierbei, dass die axiale Kraft, die benötigt wird, um die Wischerwelle in das Aufnahmemittel hineinzuschieben, zu undefiniert ist und sich somit ein wirksamer Fußgängeraufprallschutz nur unzureichend realisieren lässt.

### Vorteile der Erfindung

Die erfindungsgemäße Scheibenwischvorrichtung mit den Merkmalen des Hauptanspruchs hat den Vorteil, dass durch ein C-förmiges Arretierungselement, welches also im wesentlichen ringförmig ausgebildet ist und entlang seines Umfangs eine Unterbrechung aufweist, das von im wesentlichen im Querschnitt rechteckiger Struktur ist, eine einfache und kostengünstige Lösung gezeigt ist, bei der sich darüber hinaus die vorbestimmte Kraft leicht einstellen lässt. Das Arretierungselement vermag so auf einer Schräge des Einstichs bei Einwirkung der vorbestimmten Kraft auf die Wischerwelle, zu gleiten, so dass ein optimaler Fußgängeraufprallschutz realisiert ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Schräge umlaufend ausgebildet ist und bezüglich Längsachse der Wischerwelle einen Winkel zwischen 25 und 75 Grad, insbesondere zwischen 35 und 55 Grad, vorzugsweise zwischen 40 und 50 Grad aufweist. Auf diese Weise ist ein sicheres gleiten des Arretierungselementes auf der Schräge des Einstichs der Wischerwelle gewährleistet und die Wischerwelle leicht zu fertigen.

Besonders vorteilhaft ist hierbei, wenn der Winkel der Schräge etwa 45 Grad aufweist.

Idealerweise ist die vorbestimmte Kraft zwischen 800 und 3000 N, insbesondere zwischen 1000 und 2000 N, vorzugsweise bei etwa 1500 N angesiedelt. Dies sind typischerweise die Kräfte, mit denen ein Fußgänger bei einem Aufprall auf die Wischerwellen der Scheibenwischvorrichtung des Kraftfahrzeuges aufprallt, so dass erhebliche Verletzungen des Fußgängers vermieden werden können.

In einer einfachen Ausführung wird die Abhängigkeit der Kraft durch den Winkel der Schräge bezüglich der Längsachse der Wischerwelle bestimmt.

Vorteilhafterweise weist der Einstich im Querschnitt zwei Bereiche auf, und zwar einen ersten Gleitbereich, der durch die Schräge gebildet ist, und einen zweiten Sitzbereich der eben oder leicht angeschrägt ist und in dem das Arretierungselement in der normalen Betriebsposition angeordnet ist.

Besonders vorteilhaft ist hierbei, wenn der Einstich im Querschnitt drei Bereiche aufweist, und zwar neben dem Gleitbereich und dem Sitzbereich noch einen weiteren Schrägbereich, so dass das Arretierungselement in Einfacherweise in den Einstich eingesetzt werden kann, wodurch die Montage erleichtert wird.

Besonders kostengünstig ist das Arretierungselement als Stanzteil, insbesondere aus Blech oder als Kunststoffteil ausgebildet.

Um den Verschleiß am Aufnahmemittel gering zu halten, liegt vorteilhafterweise das Arretierungselement auf einer Anlaufscheibe auf, die koaxial zur Wischerwelle auf das Aufnahmemittel aufgesteckt ist.

Idealerweise ist die Anlaufscheibe am Aufnahmemittel abgestützt.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in einer schematischen Darstellung,
Figur 2 das Wischerlager mit einer Wischerwelle einer erfindungsgemäßen Scheibenwischvorrichtung in perspektivischer Darstellung,
Figur 3 das freie Ende der Wischerwelle einer erfindungsgemäßen Darstellung im Detail,
Figur 4a eine Wischerwelle einer erfindungsgemäßen Scheibenwischvorrichtung im Detail
Figur 4b ein Arretierungselement einer erfindungsgemäßen Scheibenwischvorrichtung in einer Draufsicht und
Figur 5 den Einstich in der Wischerwelle in einer schematischen Querschnittsdarstellung.

### Beschreibung des Ausführungsbeispiels

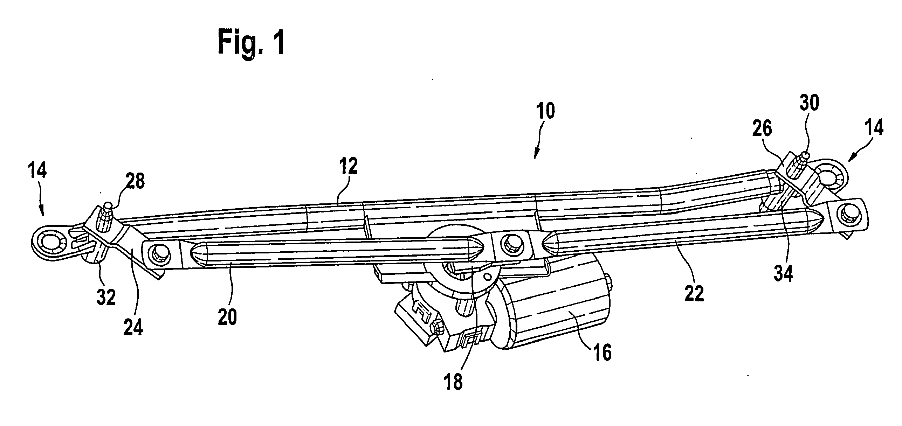

Figur 1 zeigt eine erfindungsgemäße Scheibenwischvorrichtung 10 in perspektivischer Darstellung.

Diese umfasst ein Trägerrohr 12, das zwei Enden aufweist, an denen jeweils ein Wischerlager 14 befestigt ist. In der Mitte der Längserstreckung des Trägerrohrs 12 ist ein Wischermotor 16 als Antriebseinheit angeordnet, der eine Kurbel 18, entweder in ein Hin- und Herbewegung oder in eine umlaufende Bewegung versetzt. Das freie Ende der Kurbel 18 ist mit zwei Schubstangen 20, 22 verbunden, welche Antriebskurbeln 24, 26 bewegen, die drehfest mit Wischerwellen 28, 30 verbunden sind und diese antreiben. Die Wischerwellen 28, 30 sind in den Aufnahmemitteln 32, 34 der Wischerlager 14 drehbar gelagert und in montiertem Zustand drehfest mit den Wischerarmen des Kraftfahrzeugs verbunden, an deren freien Enden Wischblätter befestigt werden können. Wischerarme und Wischblätter sind hier der Übersichtlichkeit halber nicht gezeichnet.

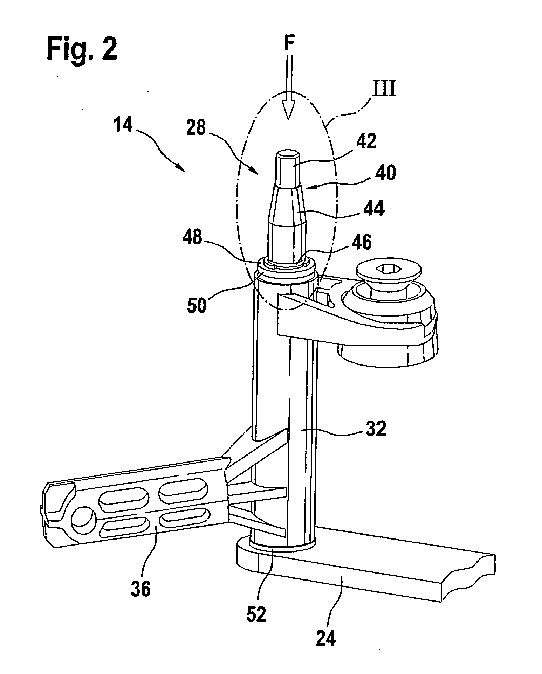

In Figur 2 ist ein Wischerlager 14 einer erfindungsgemäßen Scheibenwischvorrichtung 10 im Detail gezeigt.

Das Wischerlager 14 umfasst im Wesentlichen das als Formrohr ausgebildete Aufnahmemittel 32 auf, an den sich radial nach Außen ein Befestigungsstutzen 36 erstreckt, der zur Befestigung des Wischerlagers am Tragrohr 12 dient. Ebenso radial nach Außen, jedoch um etwa 180 Grad versetzt, erstreckt sich vom Aufnahmemittel 32 eine Befestigungsplatte 38, die zur Befestigung des Wischerlagers 14 und damit der gesamten Scheibenwischvorrichtung 10 am Kraftfahrzeug dient. Das Wischerlager 14 ist einstückig aus Kunststoff in einem Spritzgussverfahren hergestellt. Natürlich kann das Wischerlager 14 auch aus Metall, beispielsweise Aluminium oder Zink in einem Druckgußverfahren hergestellt sein.

In das Formrohr 32 ist die Wischerwelle 28 eingeschoben. Die Wischerwelle ist länger als die Längserstreckung des Formrohrs 32 und ragt an einem Ende wesentlich über das Formrohr 32 hinaus. Dieses Ende wird im folgenden als freies Ende 40 bezeichnet. Am freien Ende 40 ist im eingebauten Zustand drehfest der Wischerarm mit der Wischerwelle 28 verbunden. Hierzu weist das freie Ende ein Gewinde 42 sowie einen Konus 44 auf. An dem, dem freien Ende 40 gegenüberliegenden Ende der Wischerwelle 28 ist die Antriebskurbel 24 drehfest mit der Wischerwelle 28 verbunden, so dass diese über die Antriebskurbel 24 in eine Hin- und Herbewegung versetzbar ist.

Die Wischerwelle 28 weist darüber hinaus einen radial umlaufenden Einstich 46 auf, in den ein C-förmiger, im Querschnitt rechteckiger Sicherungsring als Arretierungselement 48 eingesetzt ist. Das Arretierungselement 48 bzw. der Einstich 46 sind bezüglich der Längserstreckung der Wischwelle 28 derart angeordnet, dass das Arretierungselement 48 im Betrieb auf einer Anlaufscheibe 50 aufliegt, die wiederum direkt am Formrohr 32, also am Aufnahmemittel abgestützt ist. Ebenso ist zwischen der Antriebskurbel 24 und dem Formrohr 32 eine weitere Anlaufscheibe 52 angeordnet.

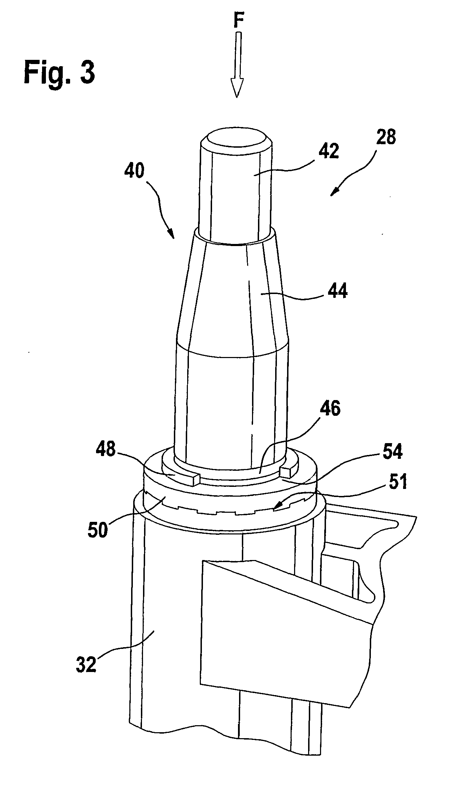

In Figur 3 ist das freie Ende der Wischerwelle 28 mit dem oberen Abschnitt des Formrohrs 32 im Detail dargestellt.

Das Formrohr 32 dient als Lager für die Wischerwelle 28. Typischerweise sind hierzu in das Formrohr 32 Lagerbuchsen eingesetzt. In dem Bereich der Längserstreckung der Wischerwelle 28, aus dem diese aus dem Formrohr 32 heraustritt, ist der im Querschnitt wannenförmige Einstich 46 angeordnet. In diesem Einstich sitzt das Arretierungselement 48, welches als Ring mit einer Unterbrechung 54, also C-förmig ausgebildet ist. Dieses Arretierungselement 48 ist im Querschnitt von im wesentlichen rechteckiger Gestalt und liegt auf der Anlaufscheibe 50 auf. Die Anlaufscheibe 50 wiederum liegt direkt auf der Deckfläche 51 des hohlzylindrischen Formrohrs 32 auf.

Wirkt nun eine Kraft F, beispielsweise durch den Aufprall eines Fußgängers auf die Wischerwelle 28 in axialer Richtung auf die selbe ein, so wird das C-förmige Arretierungselement durch die wannenförmige Ausbildung des Einstichs 46 aufgebogen, wodurch sich das freie Ende 40 der Wischerwelle 28 in Richtung des Formrohrs 32 als Aufnahmemittel verschieben kann. Auf diese Weise werden Verletzungen des Fußgängers beim Aufprall vermieden.

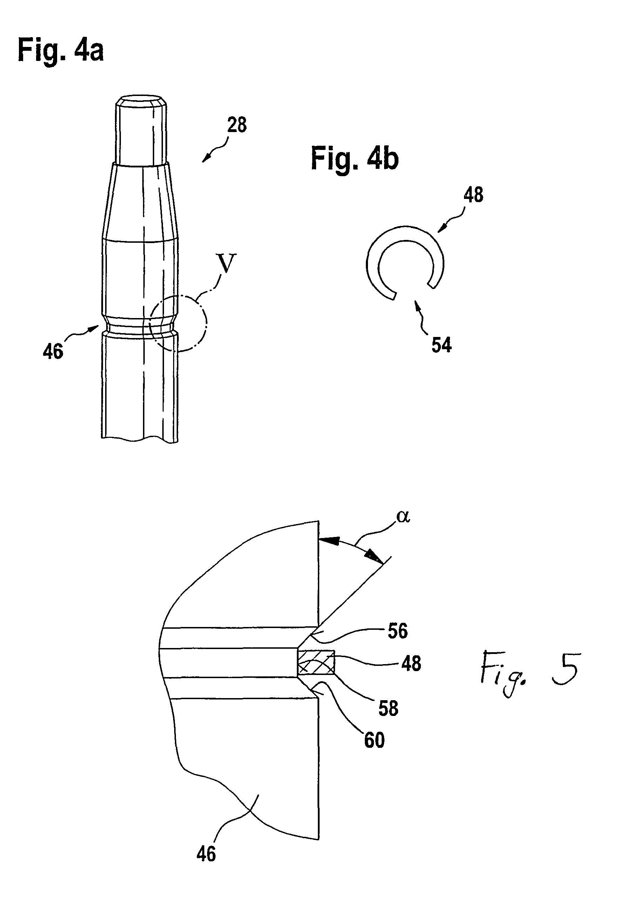

In Figur 4a ist die Wischerwelle 28 einer erfindungsgemäßen Scheibenwischvorrichtung 10 mit dem Einstich 46 nochmals im Detail dargestellt. Der Einstich 46 ist umlaufend angeordnet und weist eine im wesentlichen wannenförmige Querschnittsstruktur auf. Selbstverständlich ist auch möglich, im Einstich 46 eine radiale Unterbrechung vorzusehen, beispielsweise um ein Verdrehen des Arretierungselementes 48 zu verhindern.

In Figur 4b ist ein Arretierungselement 48 in einer Draufsicht gezeigt. Das Arretierungselement 48 ist aus Blech gestanzt und von im wesentlichen ringförmiger Struktur mit der Unterbrechung 54, so dass ein C-förmiges Element entsteht, was einfach in den Einstich 46 der Wischerwelle eingesetzt werden kann. Im Querschnitt ist das Arretierungselement 48 rechteckig oder quadratisch. In einfacher Weise kann ein derartiges Arretierungselement 48 aus Blech ausgestanzt sein.

In Figur 5 ist der Einstich 46 und das Arretierungselement 48 im Querschnitt detailliert dargestellt. Der Einstich 46 ist wannenförmig ausgebildet und besitzt daher im wesentlichen drei Bereiche 56, 58, 60. Den ersten, durch eine Schräge 56 gebildeten Gleitbereich 56, der um einen Winkel alpha um etwa 45 Grad gegenüber der Längsachse der Wischerwelle 28 geneigt ist. An diesen Gleitbereich 56 schließt sich unmittelbar ein leicht angeschrägter Sitzbereich 58 an, der gegenüber der Längsachse der Wischwelle 28 um einen Winkel kleiner als 10 Grad in entgegengesetzter Richtung zum Gleitbereich 56 geneigt ist. Durch diesen Sitzbereich 58, der natürlich auch eben ausgebildet sein kann, wird das Arretierungselement 48 am Gleitbereich 56 gehalten. An den Sitzbereich 58 schließt sich als dritter Bereich ein Schrägbereich 60 an, der ebenso wie der Gleitbereich 56 in einem Winkel von etwa 45 Grad bezüglich der Längsachse der Wischerwelle 28, jedoch in entgegengesetzter Richtung geneigt ist, derart, dass die im Querschnitt wannenförmige Form des Einstichs 46 entsteht.

Während dem normalen Wischbetrieb der Scheibenwischvorrichtung 10, ist das Arretierungselement 48 im Sitzbereich 58 des Einstichs 46 angeordnet. Wirkt nun eine im wesentlichen axiale Kraft F auf das freie Ende 40 der Wischerwelle 28, so gleitet das Arretierungselement 48 auf der Schräge des Gleitbereichs 56 entlang und wird dadurch aufgebogen. Hierzu muss einerseits die Reibkraft, als auch die Kraft zum Aufbiegen des Arretierungselementes 48 aufgebracht werden, wodurch Energie aus dem die Kraft F verursachenden Aufprall absorbiert wird. Hat das Arretierungselement 48 den Gleitbereich 56 vollständig durchquert, so gleitet es auf der Außenfläche der zylindrischen Wischerwelle 28 entlang, wobei durch die Reibung zwischen Wischerwelle 28 und Arretierungselement 48 weiter Energie absorbiert wird. Die Wischerwelle 28 verschwindet hierbei mehr und mehr im Aufnahmemittel 32 des Wischerlagers 14.

Die Kraft F, die benötigt wird, um das Arretierungselement auf der Schräge des Gleitbereichs 56 gleiten zu lassen, ist durch den Winkel alpha in einfacher Weise einstellbar. Zusätzlich kann auch zwischen dem Sitzbereich 58 und dem Gleitbereich 56 ein Hilfsformelement, beispielsweise ein Radius vorgesehen werden, so dass das Arretierungselement 48 erst bei Überwindung einer Anfangskraft FA auf der Schräge 56 zu gleiten beginnt. Durch eine geeignete Wahl der Materialien und/oder der Oberflächenbeschaffenheit der Wischwelle 28 und des Arretierungselementes 48 kann die vorbestimmte Kraft F natürlich auch eingestellt werden.

Natürlich kann die erfindungsgemäße Ausbildung auch bei einer anderen Scheibenwischvorrichtung 10 verwendet werden. Speziell bei Scheibenwischvorrichtungen mit einem Wischer-Direkt-Antrieb, bei denen auf ein Schubstangengetriebe verzichtet wird, läßt sich durch die erfindungsgemäße Ausbildung ein wirksamer und kostengünstiger Fußgängeraufprallschutz realisieren.

## Patentansprüche

1. Scheibenwischvorrichtung (10), insbesondere für ein Kraftfahrzeug, mit mindestens
- einer Wischerwelle (28) die einen Einstich (46) aufweist und
- einem aus Kunststoff ausgebildeten Aufnahmemittel (32) zur teilweisen Aufnahme der Wischerwelle (28), die mit einem freien Ende (40) aus dem Aufnahmemittel (32) herausragt und
- einem, im wesentlichen ringförmig ausgebildeten Arretierungselement (48), das entlang seines Umfangs eine Unterbrechung (54) aufweist, und zur zumindest teilweisen, axialen Arretierung der Wischerwelle (28) im Aufnahmemittel (32) dient und im Einstich (46) angeordnet ist, wobei der Einstich (46) in axialer Richtung der Wischerwelle (28) zumindest eine Schräge (56) aufweist, an der das Arretierungselement (48), bei Einwirkung einer vorbestimmten, im wesentlichen axialen Kraft (F), auf der Wischerwelle (28), entlang zu gleiten vermag,
**dadurch gekennzeichnet, dass**
- das Arretierungselement (48) von im Wesentlichen im Querschnitt rechteckiger Struktur ist.

2. Scheibenwischvorrichtung (10) nach Anspruch 1, **dadurch gekennzeichnet, dass** die Schräge (56) umlaufend ausgebildet ist und bezüglich der Längsachse der Wischerwelle (28) einen Winkel (alpha) zwischen 25 und 75 Grad, insbesondere zwischen 35 und 55, vorzugsweise zwischen 40 und 50 Grad aufweist.

3. Scheibenwischvorrichtung (10) nach Anspruch 2, **dadurch gekennzeichnet, dass** die Schräge (56) einen Winkel (alpha) von etwa 45 Grad aufweist.

4. Scheibenwischvorrichtung (10) nach einem der vorhergehenden Ansprüche,
**dadurch gekennzeichnet, dass** die vorbestimmte Kraft (F) zwischen 800 und 3000 N, insbesondere zwischen 1000 und 2000 N, vorzugsweise etwa 1500 N beträgt.

5. Scheibenwischvorrichtung (10) nach Anspruch 4, **dadurch gekennzeichnet, dass** der Winkel der Schräge (56) bezüglich der Längsachse der Wischerwelle (28) in Abhängigkeit der Kraft (F) bestimmt ist.

6. Scheibenwischvorrichtung (10) nach einem der vorhergehenden Ansprüche,
**dadurch gekennzeichnet, dass** der Einstich (46) im Querschnitt mindestens zwei Bereiche (56, 58) aufweist und zwar einen ersten, durch die Schräge (56) gebildeten Gleitbereich (56) und einen zweiten, sich an den Gleitbereich (56) anschließenden im wesentlichen ebenen oder leicht angeschrägten Sitzbereich (58).

7. Scheibenwischvorrichtung (10) nach Anspruch 6, **dadurch gekennzeichnet, dass** *der Einstich* (*46*) *im Querschnitt drei Bereiche* (5*6, 58*, *60*) aufweist und zwar einen ersten Gleitbereich (56), einen zweiten Sitzbereich (58) und einen dritten Schrägbereich (60) der sich an den Sitzbereich (58) auf der Seite des Aufnahmemittels (32) anschließt und im wesentlichen wie der Gleitbereich (58) ausgebildet ist, so dass der Einstich (46) im Querschnitt von im wesentlichen wannenförmiger Struktur ist.

8. Scheibenwischvorrichtung (10) nach einem der vorhergehenden Ansprüche,
**dadurch gekennzeichnet, dass** das Arretierungselement (48) als Stanzteil oder als Kunststoffteil ausgebildet ist.

9. Scheibenwischvorrichtung (10) nach einem der vorhergehenden Ansprüche,
**dadurch gekennzeichnet, dass** das Arretierungselement (48) auf einer Anlaufscheibe (50) aufliegt.

10. Scheibenwischvorrichtung (10) nach Anspruch 9, **dadurch gekennzeichnet, dass** die Anlaufscheibe (50) am Aufnahmemittel (32) abgestützt ist.

## Claims

1. Window wiping device (10), in particular for a motor vehicle, with at least
- one wiper shaft (28) which has a recess (46), and
- one receiving means (32) which is formed from plastic and is intended for partially receiving the wiper shaft (28) which protrudes at a free end (40) out of the receiving means (32), and
- one locking element (48), which is of substantially annular design, has an interruption (54) along the circumference thereof and serves for the at least partial axial locking of the wiper shaft (28) in the receiving means (32) and is arranged in the recess (46), wherein
- the recess (46) has at least one slope (56) in the axial direction of the wiper shaft (28), along which slope the locking element (48) can slide when a predetermined, substantially axial force (F) acts on the wiper shaft (28),
**characterized in that**
the locking element (48) is of a substantially rectangular structure in cross section.

2. Window wiping device (10) according to Claim 1, **characterized in that** the slope (56) is of encircling design and has an angle (alpha) of between 25 and 75 degrees, in particular between 35 and 55 degrees, preferably between 40 and 50 degrees, with respect to the longitudinal axis of the wiper shaft (28).

3. Window wiping device (10) according to Claim 2, **characterized in that** the slope (56) has an angle (alpha) of approximately 45 degrees.

4. Window wiping device (10) according to one of the preceding claims, **characterized in that** the predetermined force (F) is between 800 and 3000 N, in particular between 1000 and 2000 N, and is preferably approximately 1500 N.

5. Window wiping device (10) according to Claim 4, **characterized in that** the angle of the slope (56) with respect to the longitudinal axis of the wiper shaft (28) is determined depending on the force (F).

6. Window wiping device (10) according to one of the preceding claims, **characterized in that** the recess (46) has at least two regions (56, 58) in cross section, specifically a first sliding region (56) which is formed by the slope (56) and a second bearing region (56) which adjoins the sliding region (56) and is substantially planar or is slightly bevelled.

7. Window wiping device (10) according to Claim 6, **characterized in that** the recess (46) has three regions (56, 58, 60) in cross section, specifically a first sliding region (56), a second bearing region (58) and a third oblique region (60) which adjoins the bearing region (58) on the side of the receiving means (32) and is formed substantially in the same manner as the sliding region (58) such that the recess (46) is of a substantially trough-shaped structure in cross section.

8. Window wiping device (10) according to one of the preceding claims, **characterized in that** the locking element (48) is designed as a punched part or as a plastic part.

9. Window wiping device (10) according to one of the preceding claims, **characterized in that** the locking element (48) rests on a thrust washer (50).

10. Window wiping device (10) according to Claim 9, **characterized in that** the thrust washer (50) is supported on the receiving means (32).

## Revendications

1. Dispositif essuie-glace (10), en particulier pour un véhicule automobile, comprenant au moins :
- un arbre d'essuie-glace (28) qui présente une encoche (46) et
- un moyen de réception (32) réalisé en plastique pour recevoir en partie l'arbre d'essuie-glace (28), qui fait saillie par une extrémité libre (40) hors du moyen de réception (32), et
- un élément de blocage (48) réalisé essentiellement sous forme annulaire, qui présente, le long de sa périphérie, une interruption (54), et qui sert au blocage axial au moins partiel de l'arbre d'essuie-glace (28) dans le moyen de réception (32) et qui est disposé dans l'encoche (46),
- l'encoche (46) présentant, dans la direction axiale de l'arbre d'essuie-glace (28), au moins un biseau (56) le long duquel l'élément de blocage (48) peut glisser lors de l'application d'une force essentiellement axiale prédéterminée (F) sur l'arbre d'essuie-glace (28),
**caractérisé en ce que**
- l'élément de blocage (48) est une structure de section transversale essentiellement rectangulaire.

2. Dispositif essuie-glace (10) selon la revendication 1, **caractérisé en ce que** le biseau (56) est réalisé sous forme périphérique et présente, par rapport à l'axe longitudinal de l'arbre d'essuie-glace (28), un angle (alpha) compris entre 25 et 75 degrés, notamment entre 35 et 55 degrés, de préférence entre 40 et 50 degrés.

3. Dispositif essuie-glace (10) selon la revendication 2, **caractérisé en ce que** le biseau (56) présente un angle (alpha) d'environ 45 degrés.

4. Dispositif essuie-glace (10) selon l'une quelconque des revendications précédentes, **caractérisé en ce que** la force prédéterminée (F) est comprise entre 800 et 3000 N, en particulier entre 1000 et 2000 N, de préférence vaut approximativement 1500 N.

5. Dispositif essuie-glace (10) selon la revendication 4, **caractérisé en ce que** l'angle du biseau (56) par rapport à l'axe longitudinal de l'arbre d'essuie-glace (28) est déterminé en fonction de la force (F).

6. Dispositif essuie-glace (10) selon l'une quelconque des revendications précédentes, **caractérisé en ce que** l'encoche (46) présente en section transversale au moins deux régions (56, 58), à savoir une première région de glissement (56) formée par le biseau (56) et une deuxième région de siège (58) essentiellement plane ou légèrement biseautée, se raccordant à la région de glissement (56).

7. Dispositif essuie-glace (10) selon la revendication 6, **caractérisé en ce que** l'encoche (46) présente, en section transversale, trois régions (56, 58, 60), à savoir une première région de glissement (56), une deuxième région de siège (58) et une troisième région biseautée (60), qui se raccorde à la région de siège (58) du côté du moyen de réception (32) et qui est réalisée sensiblement comme la région de glissement (56), de sorte que l'encoche (46) soit une structure ayant une section transversale essentiellement en forme de cuvette.

8. Dispositif essuie-glace (10) selon l'une quelconque des revendications précédentes, **caractérisé en ce que** l'élément de blocage (48) est réalisé sous forme de pièce estampée ou sous forme de pièce en plastique.

9. Dispositif essuie-glace (10) selon l'une quelconque des revendications précédentes, **caractérisé en ce que** l'élément de blocage (48) s'applique sur un disque de butée (50).

10. Dispositif essuie-glace (10) selon la revendication 9, **caractérisé en ce que** le disque de butée (50) est supporté sur le moyen de réception (32).
